# EUROPÄISCHE PATENTANMELDUNG

(11) **EP 2 093 978 A2**
(43) Veröffentlichungstag der Anmeldung: **26.08.2009**
(21) Anmeldenummer: 09000556.2
(22) Anmeldetag: 16.01.2009
(51) Int. Cl.: H04L 29/08, G06F 17/30

(54) **Client-Vorrichtung und Server-Vorrichtung**

(30) Priorität: 01.02.2008 DE 102008007579
(71) Anmelder: Phoenix Contact GmbH & Co. KG, 32825 Blomberg (DE)
(72) Erfinder: Pfaff, Holger, 31848 Bad Münster (DE); Leseberg, Gerd, 31812 Bad Pyrmont (DE)
(74) Vertreter: Bill, Burkart Hartmut

(57) **Zusammenfassung**

Die Erfindung betrifft eine Client-Vorrichtung, die ausgebildet ist, über ein Kommunikationsnetzwerk mit einer entfernten Server-Vorrichtung, auf der ein Computerprogramm abläuft, zu kommunizieren. Die Client-Vorrichtung umfasst eine Empfangseinrichtung (101) zum Empfangen einer Kopie des Computerprogramms über das Kommunikationsnetzwerk, eine Prozessoreinrichtung (103) zum Durchführen einer Änderung in der Kopie des Computerprogramms und eine Sendeeinrichtung (105) zum Aussenden der Änderung über das Kommunikationsnetzwerk zu der entfernten Server-Vorrichtung.

## Beschreibung

Die vorliegende Erfindung betrifft das Gebiet der Informationstechnologie.

Die klassische Aufgabe einer Visualisierung von beispielsweise internen Zuständen einer elektronischen Vorrichtung oder von Prozessen besteht darin, applikations- oder prozessspezifische Daten einer Automatisierungsanwendung darzustellen und dem Anwender die Möglichkeit zu geben, diese zu beeinflussen und damit steuernd und regelnd in die unterlagerte Automatisierungsanwendung einzugreifen. Dabei kann der Benutzer über eine grafische Darstellung innerhalb der Visualisierung unterlagerte Automatisierungsprozesse beobachten oder durch Eingabe von Werten bzw. das Betätigen von Bedienelementen diese Prozesse beeinflussen.

Eine Visualisierung besteht üblicherweise aus einer Zusammenstellung von grafischen Elementen, von definierten Verbindungen zu prozessspezifischer Sensorik und Aktorik sowie von einem hinterlegten Regel- und Rechtesystem. In dem Regelsystem ist beispielsweise definiert, zu welchem Zeitpunkt welche Information verändert wird. In dem Rechtesystem ist hingegen definiert, welcher Benutzer welche Funktion in der Visualisierung ausführen darf. Eine Visualisierung besteht dabei in der Regel aus mehreren Visualisierungsseiten, die beispielsweise auf einem Bildschirm darstellbar sind.

Die einzelnen Visualisierungsseiten selbst werden oft von einem speziellen Programm, in der Regel von einem Service, zur Verfügung gestellt. Ein Service ist ein Programm, welches betriebssystemnah läuft, kein Benutzer-Interface besitzt und definierte Dienste zur Verfügung stellt. Dieser Service kann abhängig von der Art und Weise des jeweiligen Systems entweder auf einem lokalen PC (PC: Personal Computer) oder einem entfernten PC bzw. Server ablaufen. Die einzelnen Visualisierungsseiten liegen somit entweder direkt auf dem lokalen PC und werden dort dargestellt oder sie werden über eine Netzwerkverbindung von einem Server auf den lokalen PC geladen und dann dargestellt.

Der vorstehend beschriebene Service, der die Visualisierungsseiten dem Anwender zur Verfügung stellt, wird auch als "Runtime" bezeichnet. Bei der Nutzung eines Servers wird jedoch auf einem lokalen PC, der zumindest eine proprietäre Client-Software benötigt, beispielsweise seitens eines Benutzers zugegriffen. Bei einem systemischen Zugriff läuft die Runtime-Routine auf einem Server ab, was auch bei einer Benutzung von Browser-Plugins auf einem Client gilt. Bei einer Nutzung eines einzelnen PCs läuft die Runtime-Routine hingegen auf einem lokalen PC, da dieser gleichzeitig einen Server und einen Client darstellt. Die Client-Software stellt entweder ein eigenes Bedien-Interface für die Visualisierung zur Verfügung oder sie erweitert die evtl. vorhandene Client-Software, wie beispielsweise einen Internet-Browser mit entsprechenden Funktionen, um die Inhalte der Visualisierung darstellen und bedienen zu können. Bei Web-Clients werden solche Funktionserweiterungen als "Plug-Ins" bezeichnet.

Die Erstellung einer Visualisierung mit ihren Funktionalitäten erfolgt heutzutage durch eine proprietäre betriebssystemunabhängige Entwicklungsumgebung auf einem lokalen PC oder einem Server. Das hat den Nachteil, dass eine Veränderung oder eine Ergänzung der Visualisierung nur mit der proprietären Entwicklungsumgebung möglich ist, mit der sie erstellt wurde. Daraus ergibt sich automatisch gleichzeitig die Festlegung auf das von der Entwicklungsumgebung unterstützte Betriebssystem. Ist die Visualisierung auf einem entfernten Server im Einsatz, so muss diese nach jeder Modifikation erneut von einem Entwicklungsrechner aus, beispielsweise von einem lokalen PC, auf den Server übertragen werden. Ferner sind die Veränderungen und Erstellungen der Visualisierung an den Ort gebunden, wo sich der lokale PC, auf dem die Entwicklungssoftware läuft, befindet.

Die vorstehend geschilderten Probleme gelten nicht nur für Visualisierungssoftware, sondern sinngemäß auch für beliebige Computerprogramme in einem dezentralen System- bzw. Informationsszenario, bei dem beispielsweise ein Computerprogramm auf einem Client-Rechner abgelegt bzw. ausgeführt wird und dessen Wirkung sich auf lokalen Rechner erstreckt bzw. von dort aus festgestellt werden kann.

Es ist die Aufgabe der Erfindung, ein effizientes Konzept zum Handhaben von Computerprogrammen in einem dezentralen System- bzw. Informationsszenario zu schaffen.

Diese Aufgabe wird durch die Merkmale der unabhängigen Patentansprüche gelöst.

Die Erfindung betrifft den Fall, bei dem auf einem zentralen Rechner, beispielsweise auf einem Server, ein Computerprogramm ausgeführt wird, das mittels eines lokalen Computers, beispielsweise eines Clients, verwaltet, gepflegt oder geändert wird. Erfindungsgemäß wird beispielsweise eine Programmkopie von dem Server zu dem Client über beispielsweise ein drahtloses oder ein drahtgebundenes Kommunikationsnetzwerk übertragen. Die Programmkopie dient als Basis zur Durchführung von Änderungen in dem Programm, wobei beispielsweise jede Änderung bevorzugt in Echtzeit zu dem Server übertragen wird, woraufhin das auf dem Server ablaufbare Programm geändert werden kann.

Gemäß einem Aspekt betrifft die Erfindung eine Client-Vorrichtung, die ausgebildet ist, über ein Kommunikationsnetzwerk mit einer entfernten Server-Vorrichtung, auf der ein Computerprogramm abläuft, zu kommunizieren. Die Client-Vorrichtung umfasst eine Empfangseinrichtung zum Empfangen einer Kopie des Computerprogramms über das Kommunikationsnetzwerk, eine Prozessoreinrichtung zum Durchführen einer Änderung in der Kopie des Computerprogramms und eine Sendeeinrichtung zum Aussenden der Änderung über das Kommunikationsnetzwerk zu der entfernten Server-Vorrichtung.

Gemäß einer Ausführungsform ist die Prozessoreinrichtung ausgebildet, eine kontextbezogene Änderung in der der Kopie des Computerprogramms durchzuführen.

Gemäß einer Ausführungsform ist die Sendeeinrichtung ausgebildet, Informationen über eine Mausbewegung oder über eine Tastatureingabe als die Änderung auszusenden.

Gemäß einer Ausführungsform ist die Empfangseinrichtung ausgebildet, neben der Kopie des Computerprogramms ein Änderungsprogramm zu empfangen. Dabei die Prozessoreinrichtung ausgebildet, das Änderungsprogramm zum Durchführen der Änderung auszuführen.

Gemäß einer Ausführungsform sind die Sendeeinrichtung oder die Empfangseinrichtung ausgebildet, ein Internetprotokoll zum Kommunizieren über das Kommunikationsnetzwerk auszuführen.

Gemäß einer Ausführungsform sind die Sendeeinrichtung oder die Empfangseinrichtung ausgebildet, eine Echtzeitverbindung über das Kommunikationsnetzwerk aufzubauen oder aufrechtzuerhalten.

Gemäß einer Ausführungsform ist das Computerprogramm ein Visualisierungsprogramm.

Gemäß einem Aspekt betrifft die Erfindung eine Server-Vorrichtung, die programmtechnisch eingerichtet ist, ein Computerprogramm auszuführen. Die Servereinrichtung umfasst eine Sendeeinrichtung zum Aussenden einer Kopie des Computerprogramms über ein Kommunikationsnetzwerk, eine Empfangseinrichtung zum Empfangen einer Änderung des Computerprogramms über das Kommunikationsnetzwerk, eine Prozessoreinrichtung zum Ändern des Computerprogramms unter Berücksichtigung der empfangenen Änderung, um ein geändertes Computerprogramm zu erhalten. Dabei ist die Prozessoreinrichtung ausgebildet, das geänderte Computerprogramm auszuführen.

Gemäß einer Ausführungsform ist die Empfangseinrichtung ausgebildet, Informationen über eine Mausbewegung oder über eine Tastatureingabe als die Änderung zu empfangen.

Gemäß einer Ausführungsform ist die Sendeeinrichtung ferner ausgebildet, ein Änderungsprogramm zum Durchführen einer Änderung in dem Computerprogramm über das Kommunikationsnetzwerk auszusenden.

Gemäß einer Ausführungsform sind die Sendeeinrichtung oder die Empfangseinrichtung ausgebildet, ein Internetprotokoll zum Kommunizieren über das Kommunikationsnetzwerk auszuführen.

Gemäß einer Ausführungsform sind die Sendeeinrichtung oder die Empfangseinrichtung ausgebildet, eine Echtzeitverbindung über das Kommunikationsnetzwerk aufzubauen oder aufrechtzuerhalten.

Gemäß einer Ausführungsform ist das Computerprogramm ein Visualisierungsprogramm.

Gemäß einem Aspekt betrifft die Erfindung ein Kommunikationssystem mit der Client-Vorrichtung und der Server-Vorrichtung

Gemäß einem Aspekt betrifft die Erfindung ein Verfahren zum Ändern eines auf einer Server-Vorrichtung ablaufenden Computerprogramms unter Verwendung einer Client-Vorrichtung. Das Verfahren umfasst das Empfangen einer Kopie des Computerprogramms über ein Kommunikationsnetzwerk, das Durchführen einer Änderung in der Kopie des Computerprogramms und das Aussenden der Änderung über das Kommunikationsnetzwerk zu der Server-Vorrichtung.

Gemäß einem Aspekt betrifft die Erfindung ein Verfahren zum Durchführen einer Änderung eines Computerprogramms mit Aussenden einer Kopie des Computerprogramms über ein Kommunikationsnetzwerk, Empfangen einer Änderung des Computerprogramms über das Kommunikationsnetzwerk, Ändern des Computerprogramms unter Berücksichtigung der empfangenen Änderung, um ein geändertes Computerprogramm zu erhalten, und Ausführen des geänderten Computerprogramms.

Gemäß einem Aspekt betrifft die Erfindung ein dezentrales Verfahren zum Ändern eines Computerprogramms mit den Schritten des Verfahrens zum Ändern eines auf einer Server-Vorrichtung ablaufenden Computerprogramms und den Schritten des Verfahrens zum Durchführen einer Änderung eines Computerprogramms.

Gemäß einem Aspekt betrifft die Erfindung ein Computerprogramm zum Ausführen eines der erfindungsgemäßen Verfahrens, wenn das Computerprogramm auf einem Rechner abläuft.

Weitere Ausführungsbeispiele werden Bezug nehmend auf die beiliegenden Zeichnungen erläutert. Es zeigen:
- Fig. 1: eine Client-Vorrichtung;
- Fig. 2: eine Server-Vorrichtung;
- Fig. 3a bis 3c: ein Kommunikationsszenario; und
- Fig. 4: einen Programm-Code.

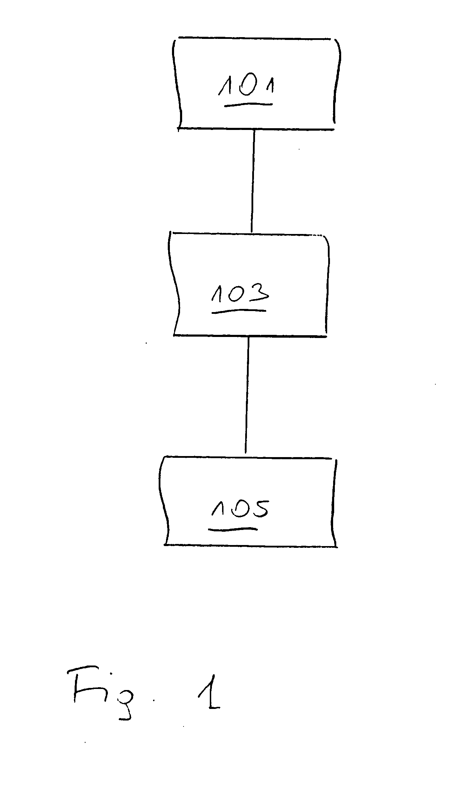

Fig. 1 zeigt eine Client-Vorrichtung mit einer Empfangsvorrichtung 101, einer Prozessoreinrichtung 103 und einer Sendeeinrichtung 105. Die in Fig. 1 dargestellte Client-Vorrichtung ist vorgesehen, mit einer entfernten Server-Vorrichtung über ein Kommunikationsnetzwerk, beispielsweise über ein Internet-Kommunikationsnetzwerk, zu kommunizieren. Die entfernte Server-Vorrichtung, beispielsweise ein zentraler Server, führt ein Programm aus, dessen Kopie über das Kommunikationsnetzwerk ausgesendet und durch die Client-Vorrichtung empfangen wird. Die Prozessoreinrichtung 103 führt beispielsweise eine Änderung in der Kopie des Computerprogramms durch, wobei die Sendeeinrichtung 105 diese Änderung, beispielsweise eine Änderung eines Zeichens oder eine Mausbewegung, bevorzugt in Echtzeit an die Server-Vorrichtung übermittelt.

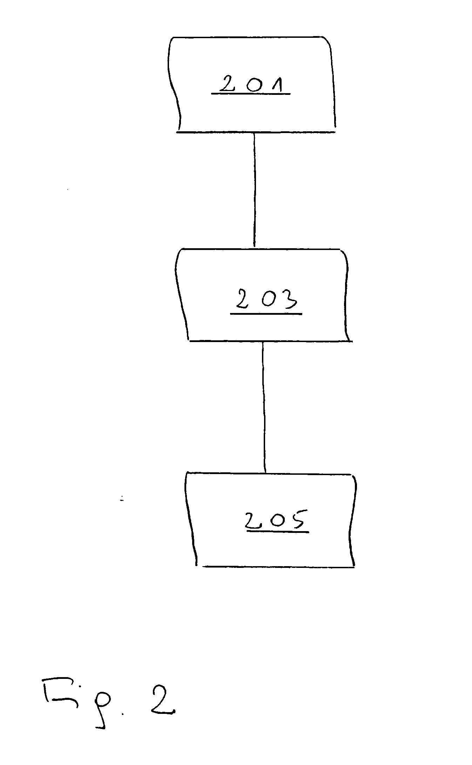

Die in Fig. 2 dargestellte Server-Vorrichtung umfasst eine Empfangseinrichtung 201 zum Empfangen der Änderung des Computerprogramms über das Kommunikationsnetzwerk, eine der Empfangseinrichtung 201 nachgeschaltete Prozessoreinrichtung 203 zum Ändern des Computerprogramms auf der Basis der empfangenen Änderung sowie eine Sendeeinrichtung 205, die vorgesehen ist, eine Kopie des Computerprogramms über das Kommunikationsnetzwerk beispielsweise an die entfernte Client-Vorrichtung auszusenden.

Bei dem Computerprogramm kann es sich beispielsweise um eine Visualisierung innerhalb eines Web-Auftritts handeln, der aus mehreren Web-Seiten bestehen kann. Um diese Visualisierung kann beispielsweise ein Web-Service mit einem (Web-)Server angesetzt werden, der in der Lage ist, Web-Seiten zur Verfügung zu stellen. Ferner wird ein Web-Client, wie beispielsweise ein Internet-Browser, eingesetzt, der in der Lage ist, die Web-Seiten darzustellen. Der Web-Client umfasst beispielsweise einen integrierten Interpreter für eine Scriptsprache, um einen Code innerhalb einer dargestellten Web-Seite ausführen zu können. Der Web-Service, z.B. ein Server, ist dabei bevorzugt vorgesehen, den Programmcode auf der Betriebssystemebene auszuführen. Serverseitig können als Programmiersprachen beispielsweise C++ oder Java oder J++ oder VB (VB: Visual Basic) eingesetzt werden.

Erfindungsgemäß wird eine Technologie bereitgestellt, mit der eine Visualisierung ohne eine proprietäre Entwicklungsumgebung innerhalb eines Web-Clients mit verbundenem Web-Server erstellt werden kann. Dabei ist es möglich, von einem beliebigen Ort aus mit Mitteln eines PCs Visualisierungsseiten auf einem geeigneten entfernten Web-Server als Server-Vorrichtung erstellen zu können. Dabei wird davon ausgegangen, dass der PC als Client-Vorrichtung eine lauffähige Web-Client-Software, wie beispielsweise einen Web-Browser, umfasst und dass eine physikalische Verbindung zwischen dem PC und dem Web-Server beispielsweise über das Internet existiert.

Demnach kann das erfindungsgemäße System beispielsweise einen lokalen PC als eine Client-Vorrichtung, auf dem ein Web-Service und eine Web-Client-Software ablaufen können, umfassen. Alternativ kann das System aus einem entfernten PC, der beispielsweise als ein Web-Server eingesetzt wird, auf dem ein Service läuft, und zumindest einem lokalen PC, der als Web-Client eingesetzt wird, auf dem eine Web-Client-Software, wie beispielsweise ein Web-Browser, abläuft, bestehen. In diesem Fall sind Web-Browser und Web-Server über ein Netzwerk verbunden. Die Client-Vorrichtung kann in diesem Falle somit den entfernten PC und/oder den lokalen PC umfassen. Der Web-Server und der Web-Client können dabei Standardprotokolle, wie beispielsweise das HTTP unterstützen, um eine Kommunikation zu ermöglichen. Der auf dem Web-Server laufende Web-Service stellt Web-Seiten zum Abruf zur Verfügung, den die Client-Vorrichtung, wie beispielsweise den Web-Client, in die Lage versetzen, beispielsweise mit einem Web-Browser auf dem Server abgelegte Visualisierungsseiten innerhalb eines Web-Auftritts zu modifizieren bzw. neue Visualisierungsseiten zu erstellen und abzulegen.

Der Web-Client verbindet sich beispielsweise mit dem Web-Browser und lädt eine Web-Seite eines Web-Auftritts. Der Inhalt der Seite repräsentiert das grafische Benutzer-Interface zum Erstellen von Visualisierungsseiten auf dem Web-Server und wird im Folgenden als Edit-Seite bezeichnet. Der Web-Server stellt dem Web-Client über diese Edit-Seite alle Funktionen zum Erstellen, Bearbeiten und Verwalten von Visualisierungsseiten zur Verfügung.

Beim Laden der Edit-Seite lädt der Client in die Edit-Seite eingebettete Script-Elemente, die dem Anwender alle notwendigen Bedienfunktionen zur Verfügung stellen. Diese Script-Elemente nehmen beispielsweise kontextbezogene Mausbewegungen und Tastatureingaben entgegen und leiten diese an den Server weiter. Der Server selbst führt die hinterlegten zugehörigen Funktionen aus, passt die betreffenden Inhalte der Visualisierungsseite an und sendet die modifizierte Seite, Teile davon oder auch eine neue Seite zur weiteren Bearbeitung zurück an den Client. Somit erfolgen die Erstellung und die Ablage der Visualisierung direkt auf dem Web-Server. Da es sich bei den Visualisierungsseiten um Web-Seiten handelt, können diese mit jedem üblichen Web-Client dargestellt und bedient werden.

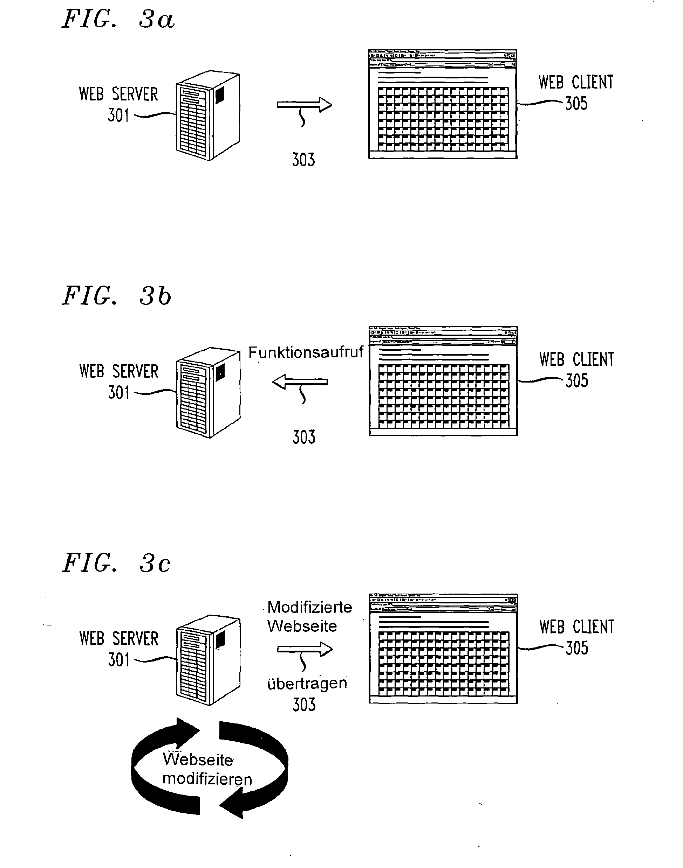

In den Fig. 3a bis 3c ist der Ablauf des erfindungsgemäßen Verfahrens dargestellt. Dabei ist ein Web-Server 301 als eine Servereinrichtung vorgesehen, über ein Kommunikationsnetzwerk 303 mit einer Client-Vorrichtung zu kommunizieren, auf der ein Web-Client 305 als ein Programm ausgeführt wird. Der Web-Client 305 fordert beispielsweise eine Web-Seite von dem Web-Server 301 an. Daraufhin überträgt der Web-Server 301 die Seite an den Web-Client 305. Die übertragene Web-Seite enthält beispielsweise einen Script-Code, der mit auf dem Server abgelegten Editierfunktionen interagieren kann. Der Benutzer betätigt beispielsweise einen Button, woraufhin der Web-Client 305 beispielsweise Argumente (Werte) zurück an den Server überträgt, die von einer Position und einer Interaktion abhängig sind. Der Server führt die zugehörige Funktion zum Modifizieren der angezeigten Visualisierungsseite aus.

Die auf dem Server aufgerufene Funktion modifiziert die aktuelle Web-Seite auf dem Server, speichert die Modifikation bzw. die Änderung und überträgt eine neue, modifizierte Seite oder Teile davon zurück an den Client. Der Benutzer kann weitere Modifikation an der neu übertragenen Seite vornehmen, bis er mit dem Ergebnis einverstanden ist, woraufhin der Editierprozess beendet wird.

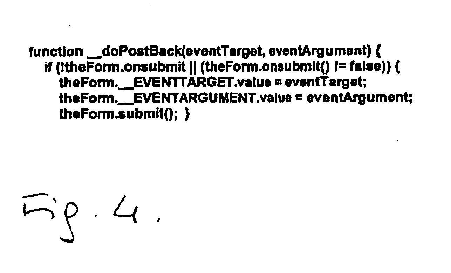

Fig. 4 zeigt ein Ausführungsbeispiel eines Java-Scripts, bei dem bei einer Bedienung der Elemente auf der Seite, beispielsweise beim Drucken eines Buttons, ausgeführt wird.

## Patentansprüche

1. Client-Vorrichtung, die ausgebildet ist, über ein Kommunikationsnetzwerk mit einer entfernten Server-Vorrichtung, auf der ein Computerprogramm abläuft, zu kommunizieren, wobei die Client-Vorrichtung folgende Merkmale umfasst:
eine Empfangseinrichtung (101) zum Empfangen einer Kopie des Computerprogramms über das Kommunikationsnetzwerk;
eine Prozessoreinrichtung (103) zum Durchführen einer Änderung in der Kopie des Computerprogramms; und
eine Sendeeinrichtung (105) zum Aussenden der Änderung über das Kommunikationsnetzwerk zu der entfernten Server-Vorrichtung.

2. Client-Vorrichtung gemäß Anspruch 1, wobei die Prozessoreinrichtung (103) ausgebildet ist, eine kontextbezogene Änderung in der der Kopie des Computerprogramms durchzuführen.

3. Client-Vorrichtung gemäß Anspruch 1 oder 2, wobei die Sendeeinrichtung (105) ausgebildet ist, Informationen über eine Mausbewegung oder über eine Tastatureingabe als die Änderung auszusenden.

4. Client-Vorrichtung gemäß einem der Ansprüche 1 bis 3, wobei die Empfangseinrichtung (101) ausgebildet ist, neben der Kopie des Computerprogramms ein Änderungsprogramm zu empfangen und wobei die Prozessoreinrichtung (103) ausgebildet ist, das Änderungsprogramm zum Durchführen der Änderung auszuführen.

5. Client-Vorrichtung gemäß einem der Ansprüche 1 bis 4, wobei die Sendeeinrichtung (105) oder die Empfangseinrichtung (101) ausgebildet sind, ein Internetprotokoll zum Kommunizieren über das Kommunikationsnetzwerk auszuführen.

6. Client-Vorrichtung gemäß einem der Ansprüche 1 bis 5, wobei die Sendeeinrichtung (105) oder die Empfangseinrichtung (101) ausgebildet sind, eine Echtzeitverbindung über das Kommunikationsnetzwerk aufzubauen oder aufrechtzuerhalten.

7. Client-Vorrichtung gemäß einem der Ansprüche 1 bis 6, wobei das Computerprogramm ein Visualisierungsprogramm ist.

8. Server-Vorrichtung, die programmtechnisch eingerichtet ist, ein Computerprogramm auszuführen, wobei die Servereinrichtung folgende Merkmale aufweist:
eine Sendeeinrichtung (201) zum Aussenden einer Kopie des Computerprogramms über ein Kommunikationsnetzwerk;
eine Empfangseinrichtung (203) zum Empfangen einer Änderung des Computerprogramms über das Kommunikationsnetzwerk;
eine Prozessoreinrichtung (205) zum Ändern des Computerprogramms unter Berücksichtigung der empfangenen Änderung, um ein geändertes Computerprogramm zu erhalten, wobei die Prozessoreinrichtung (205) ferner ausgebildet ist, das geänderte Computerprogramm auszuführen.

9. Server-Vorrichtung gemäß Anspruch 8, wobei die Empfangseinrichtung (203) ausgebildet ist, Informationen über eine Mausbewegung oder über eine Tastatureingabe als die Änderung zu empfangen.

10. Server-Vorrichtung gemäß Anspruch 8 oder 9, wobei die Sendeeinrichtung (201) ferner ausgebildet ist, ein Änderungsprogramm zum Durchführen einer Änderung in dem Computerprogramm über das Kommunikationsnetzwerk auszusenden.

11. Server-Vorrichtung gemäß einem der Ansprüche 8 bis 10, wobei die Sendeeinrichtung (201) oder die Empfangseinrichtung (203) ausgebildet sind, ein Internetprotokoll zum Kommunizieren über das Kommunikationsnetzwerk auszuführen.

12. Server-Vorrichtung gemäß einem der Ansprüche 8 bis 11, wobei die Sendeeinrichtung (201) oder die Empfangseinrichtung (203) ausgebildet sind, eine Echtzeitverbindung über das Kommunikationsnetzwerk aufzubauen oder aufrechtzuerhalten.

13. Server-Vorrichtung gemäß einem der Ansprüche 8 bis 12, wobei das Computerprogramm ein Visualisierungsprogramm ist.

14. Kommunikationssystem, mit;
der Client-Vorrichtung gemäß einem der Ansprüche 1 bis 7; und
der Server-Vorrichtung gemäß einem der Ansprüche 8 bis 13.

15. Verfahren zum Ändern eines auf einer Server-Vorrichtung ablaufenden Computerprogramms unter Verwendung einer Client-Vorrichtung, mit:
Empfangen einer Kopie des Computerprogramms über ein Kommunikationsnetzwerk;
Durchführen einer Änderung in der Kopie des Computerprogramms; und
Aussenden der Änderung über das Kommunikationsnetzwerk zu der Server-Vorrichtung.

16. Verfahren zum Durchführen einer Änderung eines Computerprogramms, mit:
Aussenden einer Kopie des Computerprogramms über ein Kommunikationsnetzwerk;
Empfangen einer Änderung des Computerprogramms über das Kommunikationsnetzwerk;
Ändern des Computerprogramms unter Berücksichtigung der empfangenen Änderung, um ein geändertes Computerprogramm zu erhalten; und
Ausführen des geänderten Computerprogramms.

17. Dezentrales Verfahren zum Ändern eines Computerprogramms, mit:
den Schritten des Verfahrens gemäß Anspruch 15; und
den Schritten des Verfahrens gemäß Anspruch 16.

18. Computerprogramm zum Ausführen eines der Verfahren gemäß einem der Ansprüche 15 bis 17, wenn das Computerprogramm auf einem Rechner abläuft.
